# EUROPÄISCHE PATENTANMELDUNG

(11) **EP 3 354 482 A1**
(43) Veröffentlichungstag der Anmeldung: **01.08.2018**
(21) Anmeldenummer: 18150984.5
(22) Anmeldetag: 10.01.2018
(51) Int. Cl.: B60C 5/22, B60C 11/16, B60C 5/24

(54) **VERFAHREN UND VORRICHTUNG ZUR EINSTELLUNG EINES REIFENPROFILS**

(30) Priorität: 31.01.2017 DE 102017201479
(71) Anmelder: Robert Bosch GmbH, 70442 Stuttgart (DE)
(72) Erfinder: Dackermann, Tim, 72072 Tuebingen (DE); Dauer, Felix, 72074 Tuebingen (DE)

(57) **Zusammenfassung**

Mit der vorliegenden Erfindung wird ein Reifen beansprucht, welcher eine veränderliche Manteloberfläche bzw. Reifenprofil aufweist. Ein derartiger Reifen kann eigenständig als Mantel ausgestattet sein oder Teil eines Schlauchreifens sein z.B. mit integriertem Fahrradschlauch. Darüber hinaus wird auch ein Rad beansprucht, bei dem ein Schlauchreifen oder ein Reifen mit einem zusätzlichen Schlauch auf einer Felge aufgebracht ist. Weiterhin wird ebenfalls ein Zweirad mit wenigstens einem derartigen Rad sowie ein Verfahren beansprucht, welches die Veränderung der Manteloberfläche bei einem beanspruchten Reifen steuert bzw. regelt.

## Beschreibung

Die Erfindung betrifft eine Vorrichtung sowie ein Verfahren zur Einstellung bzw. Veränderung eines Reifenprofils insbesondere bei einem Fahrrad.

### Stand der Technik

Für die Haftung eines Rades eines Fahrzeugs auf dem Untergrund spielt das entsprechende Reifenprofil eine große Rolle. Während Slicks, d.h. Reifen mit keinem oder nur sehr geringem Profil, auf trockener asphaltierter Straße eine optimale Wahl darstellen, da sie eine größtmögliche Haftung erlauben, sind sie im Gelände oder auf nasser Fahrbahn weniger geeignet. Aus diesem Grund werden auch bei Formel 1 Rennen die Reifen der Rennwägen ausgetauscht, sobald sich die Fahrbedingungen auf der Fahrbahn wesentlich ändern.

Bei der Fahrt mit einem normalen Fahrzeug ist jedoch bereits im Vorfeld einer Fahrt zu überlegen, welches Profil sich für die anstehende Fahrt am besten eignet. Statt dem Austausch der Räder wird bei Fahrrädern auch vielfach das gesamte Fahrrad an die zu befahrende Strecke angepasst. So wird beispielsweise ein Mountainbike vornehmlich für Geländefahrten und Rennräder überwiegend für Fahrten auf Asphalt verwendet. Eine Ausnahme stellt dabei die Fahrt im Winter dar, bei der oftmals die Radsätze ausgetauscht werden, um die Fahrt mit Spikes zu ermöglichen.

Um diesen Austausch vor oder sogar während der Fahrt zu vermeiden, wäre es vorteilhaft, einen Reifen zur Verfügung zu haben, der sich an die (erkannte) Fahrbahnbeschaffenheit anpasst.

Aus der DE 10 2013 221 050 A1 ist hierzu ein Fahrrad bzw. ein Verfahren bekannt, bei dem mittels eines Vibrationssensors auf die Eigenschaften des befahrenen Streckenabschnitts geschlossen werden kann. Darüber hinaus sind auch Verfahren zur Erfassung der Fahrbahn bekannt, die die Radgeschwindigkeiten vergleichen oder den Untergrund sensorisch mittels Radar oder Kamera aufnehmen.

Aus der US 2009165312 A ist weiterhin ein Reifen für ein Passagierfahrzeug bekannt, bei dem auf der Lauffläche Pins ausgefahren werden können, um dem Reifen eine Spikes-Funktion zu verleihen. Hierzu wird für jeden Pin ein Druckspeicher mit einem Fluid in der strukturierten Oberfläche des Reifens untergebracht. Bei kälteren Temperaturen gefriert die Flüssigkeit, z.B. Wasser, so dass der Expansionsdruck durch das Gefrieren den Pin nach außen, über die Mantelfläche hinaus drückt.

### Offenbarung der Erfindung

Mit der vorliegenden Erfindung wird ein Reifen beansprucht, welcher eine veränderliche Manteloberfläche bzw. Reifenprofil aufweist. Ein derartiger Reifen kann eigenständig als Mantel ausgestattet sein oder Teil eines Schlauchreifens sein z.B. mit integriertem Fahrradschlauch. Darüber hinaus wird auch ein Rad beansprucht, bei dem ein Schlauchreifen oder ein Reifen mit einem zusätzlichen Schlauch auf einer Felge aufgebracht ist. Weiterhin wird ebenfalls ein Zweirad mit wenigstens einem derartigen Rad sowie ein Verfahren beansprucht, welches die Veränderung der Manteloberfläche bei einem beanspruchten Reifen steuert bzw. regelt.

Der beanspruchte Reifen weist zur Veränderung der Manteloberfläche ein mit einem Medium befüllbares Volumen auf, welches weitestgehend um den gesamten Umfang des Reifens herum vorgesehen ist. Diesem Volumen ist wenigstens ein Profilelement zugeordnet, welches in Abhängigkeit der Befüllung des Volumens mit einem Fluid, z.B. Luft, aus der Manteloberfläche heraustritt oder sie in anderer Weise strukturiert. Entsprechend lässt sich durch eine Entleerung des Volumens das Profilelement wieder einfahren bzw. die Strukturierung rückgängig machen. Durch diese regenerative Veränderung der Manteloberfläche kann das Profil des Mantels an gewünschte Bedingungen auf der Fahrbahnoberfläche angepasst werden.

Prinzipiell lässt sich der beanspruchte Reifen bei allen Fahrzeugen benutzen. Besonders vorteilhaft ist die Anwendung jedoch bei derartigen Fahrzeugen, bei denen während der Fahrt unterschiedliche Straßenverhältnisse oder Untergründe vorliegen und bei denen ein Reifen- oder Radwechsel zu umständlich wäre. Beispielhaft seien hier Zweiräder und insbesondere Fahrräder genannt, bei denen ein Wechsel des Fahrbahnuntergrunds häufiger vorkommt.

In einer Ausgestaltung der Erfindung ist wenigstens ein Profilelement in Form eines Pins, eines Spikes oder eines Stifts ausgestaltet. Diese Pins, Spikes oder Stufte können aus Metall, Gummi oder einem anderen Kunststoff bestehen. Alternativ kann auch ein Profilelement in Form eines ausdehnbaren Bereichs in der Manteloberfläche ausgestaltet sein, welcher sich unter dem Einfluss des Befüllens des Volumens nach außen ausdehnt. Durch diese ausdehnbaren Bereiche lassen sich ebenfalls unterschiedliche Strukturierungen und Profile auf der Manteloberfläche erzeugen, z.B. indem die Bereiche derart ausgestaltet sind, dass sie sich bei unterschiedlichen Befüllungsgraden oder -drücken ausdehnen.

Besonders vorteilhaft ist es, wenn eine Vielzahl von Profilelementen auf der Manteloberfläche vorgesehen sind. Hierdurch kann über den gesamten Umfang des Reifens eine Verteilung von Pins, Spikes und/oder Stiften erreicht werden, die bei der Benutzung des Reifens z.B. auf Eis oder geschotterter Untergrund eine erhöhte Spurführung erlaubt. Ebenso ist möglich, durch eine Strukturierung der Oberfläche mittels ausdehnbarer Bereiche über den gesamten Reifenumfang die Lauffläche an verschiedene Untergrundsituationen anzupassen. So ist denkbar, bei einem nassen Untergrund Chevron-Strukturen zu erzeugen, die das Wasser von der Mitte der Lauffläche nach außen befördert, um so Aquaplaning zu verhindern. Diese ausdehnbaren Bereiche können dabei zusammenhängend oder vereinzelt in Längs- und/oder Querrichtung der Manteloberfläche bzw. der Lauffläche ausgestaltet sein.

Bei einer besonderen Ausführung ist dabei vorgesehen, dass der ursprüngliche Reifenmantel, d.h. ein beanspruchter Reifen, bei dem das Volumen nicht mit Medium gefüllt ist, kein oder nur ein sehr gering ausgeprägtes Reifenprofil aufweist. Dies könnte beispielsweise ein Slick-Reifen sein, dessen Oberfläche glatt oder bis auf Verschleissanzeigelöcher weitestgehend glatt ist. Derartige Reifen sind besonders für trockene Fahrbahnen geeignet. Durch die Befüllung des Volumens mit dem Fluid kann so aus einem Slick-Reifen ein Reifen für eine nasse Fahrbahn werden.

Zur Befüllung des Volumens, mittels dem die Profilelemente aus- und wieder eingefahren werden können, dient in einer Weiterbildung der Erfindung wenigstens ein Ventil. Über dieses Ventil kann die Befüllung des Volumens mit dem Fluid oder einem anderen Medium gesteuert und/oder geregelt werden. Optional kann vorgesehen sein, dass dieses eine Ventil auch zur Entleerung bzw. zur Entlüftung des Volumens verwendet werden kann. Alternativ kann auch ein zweites Ventil vorgesehen sein, welches mit dem Volumen verbunden ist und nur zu Auslasszwecken dient. Für die Befüllung alleine mit einem Ventil kann ein Druckspeicher vorgesehen sein, der mit dem unter Druck stehenden Fluid gefüllt ist. Dadurch kann auf ein zusätzliches aktives Element während des Befüllens verzichtet werden.

Das Volumen kann in Form eines Schlauchs ausgebildet sein, welches direkt am Reifenmantel, gegenüber der Lauffläche angeordnet ist. Hierbei kann die untere Begrenzung des Volumens als starre Wand ausgebildet sein. Dies kann notwendig sein, um einen ausreichenden Druck innerhalb des Volumens auszubilden, der zielgerichtet die Profilelemente radial nach außen über die Manteloberfläche hinaus drückt.

Bei einem Schlauchreifen kann das erste Volumen bzw. der durch dieses Volumen gebildete erste Schlauch auch zwischen dem für den Schlauchreifen vorgesehenen zweite Schlauch und dem Reifenmantel angeordnet sein. Dabei ist vorgesehen, dass beide Schläuche radial nach außen aneinander anliegen. Auch in diesem Fall kann die Trennschicht zwischen den beiden Schläuchen starr ausgestaltet sein, um eine Beeinträchtigung des ersten Schlauchs durch das Aufpumpen des zweiten Schlauchs zu verhindern. Weiterhin wird durch diese Starrheit den Profilelementen ermöglicht, sich nach außen zu drücken. Ansonsten könnte dieses Herausdrücken schon durch das Befüllen des zweiten Schlauchs erfolgen. Alternativ könnten auch zwischen Reifenmantel und erstem Schlauch Abstandshalter vorgesehen sein, die erst durch das Befüllen des Volumens überwunden werden. Dies kann dadurch geschehen, dass sich die Profilelemente an den Abstandshaltern vorbei nach Außen, über die Manteloberfläche bewegen oder die Abstandshalter flexibel sind und sich durch den radialen Druck nach außen zusammendrücken lassen.

Wie bereits ausgeführt, wird auch ein Rad beansprucht, welches sowohl den Reifen als auch den zweite Schlauch auf einer Felge aufweist. Bei diesem Rad kann optional auch eine ansteuerbare Pumpe vorgesehen sein, mittels der der erste Schlauch bzw. das Volumen vorzugsweise mit Luft befüllt werden kann. Hierzu kann ebenfalls die Ansteuerung wenigstens eines Ventils vorgesehen sein.

Um die Veränderung des Reifenprofils zu steuern bzw. zu regeln, kann mittels einer geeigneten Sensorik die Fahrbahn erfasst werden, auf dem sich der Reifen bzw. das Rad bewegt. Wie bereits eingangs beschrieben, sind Systeme bekannt, die mittels Radar, Kamera oder Ultraschall den Zustand der Fahrbahn erkennen. Es ist daher eine Weiterbildung der Erfindung, dass ausgehend von dem so erkannten Fahrbahnzustand das Volumen derart befüllt wird, dass sich das Reifenprofil derart verändert, dass eine sicherer Führung des Fahrzeugs ermöglicht wird. So kann beispielsweise bei der Erkennung eines rauen Untergrunds eine größere Strukturierung erzeugt werden. Hierzu kann beispielsweise eine Pumpe angesteuert werden. Denkbar ist auch, dass ein Ventil angesteuert wird, welches mit einem Druckspeicher oder einem druckerzeugenden Elemente verbunden ist.

Weitere Vorteile ergeben sich aus der nachfolgenden Beschreibung von Ausführungsbeispielen bzw. aus den abhängigen Patentansprüchen.

### Kurze Beschreibung der Zeichnungen

Mit der Figur 1 wird anhand eines Blockschaltbilds eine erfindungsgemäße Steuerung zur Profilanpassung der Manteloberfläche eines Reifens dargestellt. Anhand der Figur 2 wird anhand eines Flussdiagramms ein Steuerverfahren zur Aktivierung der Profilanpassung des Reifens gezeigt. Die Figuren 3a und 3b zeigen eine mögliche Ausgestaltung eines Reifens mit der erfindungsgemäßen Reifenprofilanpassung.

### Ausführungsform der Erfindung

Da bei Fahrten auf unterschiedlichen Fahrbahnuntergründen eine angepasste Reifenprofilierung für eine sichere Haftung und Spurführung sinnvoll ist, soll mit der vorliegenden Erfindung eine Möglichkeit geschaffen werden, das Reifenprofil während der Nutzung zu verändern.

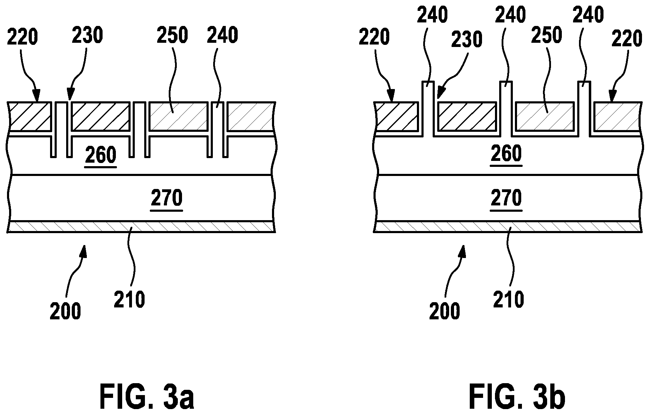

Hierzu wird ein Reifen beschrieben, der zumindest aus einem Reifenmantel 250 mit einer Manteloberfläche 220 besteht. In diesem Mantel 250 sind Öffnungen 230 eingebracht, in der verschiebbare bzw. ausfahrbare Profilelemente 240 untergebracht sind (siehe Figur 3a). Diese Profilelemente 240 sind mit einem Volumen verbunden, z.B. einem ersten Schlauch 260, welches üblicherweise über den gesamten Umfang des Reifens unterhalb des Mantels 250 angeordnet ist. Wird der Schlauch 260 mit einem Fluid gefüllt, z.B. Luft, so dehnt er sich aus und drückt die Profilelemente 240 radial nach außen, wenn der untere Teil des Schlauchs auf einer Felge 210 oder einer starren (Kunststoff-)Trennschicht zum normalen zweiten Schlauch 270 (z.B. dem üblichen Fahrradschlauch) aufliegt. So kann aus einer im unbefüllten Zustand des ersten Schlauchs 260 nahezu glatten Manteloberfläche 220 ein mit Spikes 240 versehener Reifen werden (siehe Figur 3b).

Die Profilelemente 240 können neben den in Figur 3b gezeigten Stiften auch in Form von ausdehnbaren Bereichen in der Manteloberfläche ausgestaltet sein. Hierbei auch kann der Mantel selber derartige Bereiche aufweisen, die sich nach außen wölben und Erhebungen bilden, wenn der darunter liegenden Schlauch 260 mit dem Fluid befüllt wird. Durch eine derartige Ausgestaltung der Profilelemente können komplexere Strukturierungen auf der Manteloberfläche und somit im Reifenprofil erzeugt werden. Denkbar sind hierbei beispielsweise die Erzeugung von Vertiefungen, um auf sandigem oder geschotterten Untergrund eine größere Haftung zu erreichen. Auch die Erzeugung von zur Seite führenden Vertiefungen kann vorteilhaft sein, beispielsweise um Nässe auf der Fahrbahn seitlich abzuführen, um den Aquaplaning-Effekt zu verhindern.

Zur Befüllung des Volumens bzw. des Schlauchs 260 kann ein Ventil vorgesehen sein, durch welches das Fluid eingebracht werden kann. Dieses Ventil kann ebenso dazu verwendet werden, das Fluid wieder aus dem Volumen zu entfernen. Alternativ ist möglich, ein zweites Ventil zu verwenden, so dass die Befüllung und die Entleerung über separate Ventilanordnungen erfolgen kann. Zur Befüllung und/oder zur Entleerung kann auch eine Pumpe eingesetzt werden. Alternativ kann auch ein Druckspeicher vorgesehen sein, der durch das erste Ventil als Einlassventil zur Befüllung des ersten Schlauchs verwendet werden kann. Dieser Druckspeicher kann durch den Fahrer vor oder während der Fahrt separat befüllt werden. Denkbar wäre hierbei eine Verbindung mit den Bremshebeln am Lenker eines Fahrrads, um durch eine Betätigung der Bremshebel den benötigten Druck aufzubauen. Optional kann der Druckspeicher aber auch aktiv durch eine Pumpe befüllt werden.

Die Steuerung der Befüllung sowie der Entleerung des ersten Schlauchs 260 kann über eine Steuereinheit 10 erfolgen. Hierzu kann wenigstens ein erstes Ventil 50 angesteuert werden, über das ein Fluid, z.B. Luft, in das Volumen bzw. den ersten Schlauch 260 eingebracht werden kann. Optional kann hierbei das Volumen über das Ventil 50 mit einem Druckspeicher verbunden sein, in dem das für die Befüllung unter Druck stehende Fluid befindet. Dieses erste Ventil 50 kann auch dazu genutzt werden, das Fluid aus dem Volumen zu entfernen. Alternativ kann hierzu ein zweites Ventil 60 angesteuert werden, welches ebenfalls mit dem Volumen verbunden ist. Hierzu kann ein weiterer Druckspeicher mit dem zweiten Ventil 60 verbunden sein, der einen Unterdruck aufweist, um das Fluid aus dem Volumen zu entleeren. Optional oder zusätzlich kann auch eine Pumpe 70 angesteuert werden, die alleine oder in Verbindung mit dem ersten und/oder zweiten Ventil die Befüllung und/oder die Entleerung des Volumens durchführt. Weiterhin kann eine Anzeige 80 vorgesehen sein, auf der die Befüllung, und somit die Veränderung des Reifenprofils angezeigt werden kann.

In einer besonderen Ausführung der Erfindung ist vorgesehen, dass das Fahrzeug, z.B. ein Zweirad, die Notwendigkeit zur Änderung des Reifenprofils selbsttätig erkennt. Hierzu erfasst die Steuereinheit 10 die Daten einer entsprechenden Sensorik 20, die den Zustand der Fahrbahn überwacht. Derartige Systeme sind bereits bekannt und verwenden u.a. Radar, Kamera, Laser und/oder Ultraschall, um die Beschaffenheit des Untergrunds bzw. der Fahrbahn zu erfassen. Es ist auch denkbar, mittels der Sensorik 20 die Raddrehzahlgeschwindigkeiten der Räder miteinander zu vergleichen, um aus einer ermittelten Differenz auf einen Schlupf wenigstens eines Rades zu schließen. Aus dem so ermittelten Schlupf kann dann beispielsweise auf eine glatte Fahrbahn geschlossen werden. In Abhängigkeit der erkannten Fahrbahnbeschaffenheit und somit der Notwendigkeit einer Veränderung des Reifenprofils zur Stabilisierung der Fahrt, wird die Befüllung des Volumens durch Ansteuerung eines der Ventile 50 bzw. 60 und/oder der Pumpe 70 gesteuert bzw. geregelt. Alternativ oder zusätzlich kann auch eine Aktivierung durch den Fahrer des Fahrzeugs erfolgen, an dem sich der erfindungsgemäße Reifen befindet. Dies kann beispielsweise über einen Button 30 oder einer anderen Aktivierung, z.B. im Rahmen einer Motorsteuerung eines Elektrofahrrads, erfolgen. In einer besonderen Ausgestaltung der Erfindung kann vorgesehen sein, dass der Zweiradfahrer über eine besondere Ausgestaltung des Bremshebels 40 diesen dazu nutzen kann, Druck in einem der Druckspeicher oder direkt im Volumen 260 aufzubauen.

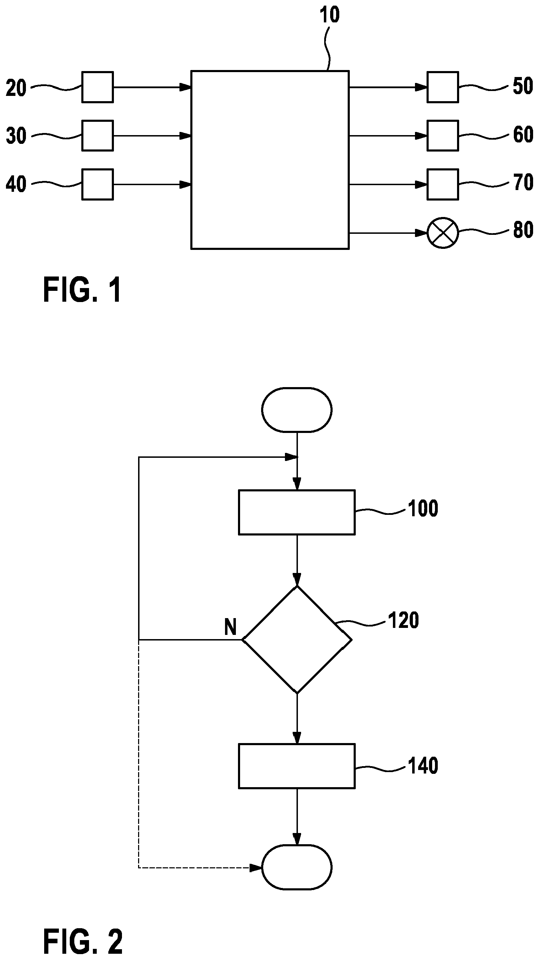

Ein mögliches Steuerungsverfahren für die Steuereinheit 10 ist in der Figur 2 dargestellt. Nach dem Start des Verfahrens werden in einem ersten Schritt 100 die Daten der Fahrbahnzustandserkennung der Sensorik 20 erfasst. In Abhängigkeit dieser erfassten Daten wird anschließend im nächsten Schritt 120 überprüft, ob eine Anpassung des Reifenprofils durchgeführt werden soll. Erkennt das System im Schritt 120, dass eine Anpassung des Reifenprofils, d.h. eine Veränderung, für die Fahrsicherheit und/oder der Effizienz der Fortbewegung vorteilhaft wäre, wird im nächsten Schritt 140 die Befüllung und/oder die Entleerung des Volumens durchgeführt. Wie bereits beschrieben, kann hierzu ein Ventil und/oder eine Pumpe angesteuert werden. Anschließend wird das Verfahren beendet oder erneut mit Schritt 100 durchlaufen.

Wird im Schritt 120 erkannt, dass eine Veränderung des Reifenprofils nicht erforderlich ist, kann das Verfahren erneut mit Schritt 100 durchlaufen oder beendet werden.

## Patentansprüche

1. Reifen mit einer veränderlichen Manteloberfläche (220), wobei
• der Reifen ein im Wesentlichen vollumfängliches Volumen (260) aufweist, und
• dem Volumen (260) wenigstens ein bewegliches Profilelement (240) zugeordnet ist, welches in Abhängigkeit von der Befüllung des Volumens (260) mit einem Fluid das Profil der Manteloberfläche (220) verändert.

2. Reifen nach Anspruch 1, **dadurch gekennzeichnet, dass** das Profilelement (240) in einem unbefüllten Zustand des ersten Volumens (260) im Wesentlichen innerhalb des Reifenmantels (250) und in einem befüllten Zustand des ersten Volumens (260) oberhalb des Reifenmantels (250) befindet.

3. Reifen nach Anspruch 1 oder 2, **dadurch gekennzeichnet, dass** das Profilelement in Form eines Pins (240), eines Stifts oder eines durch die Befüllung des Volumens (260) sich ausdehnenden Bereichs in der Manteloberfläche (220) ausgestaltet ist.

4. Reifen nach einem der vorhergehenden Ansprüche, **dadurch gekennzeichnet, dass** eine Vielzahl von Profilelementen (240) auf der Manteloberfläche (220) über den Umfang des Reifens verteilt vorgesehen sind, wobei insbesondere vorgesehen ist, dass sich die Profilelemente (240) längs und/oder quer auf der Manteloberfläche (220) erstrecken.

5. Reifen nach einem der vorgehenden Ansprüche, **dadurch gekennzeichnet, dass** der Reifenmantel (250) im unbefüllten Zustand des Volumens (260) auf der Lauffläche kein oder nur ein sehr geringes Profil aufweist.

6. Reifen nach einem der vorgehenden Ansprüche, **dadurch gekennzeichnet, dass** der Reifen ein erstes Ventil (50) aufweist, welches mit dem Volumen (260) verbunden ist und über das die Befüllung des Volumen (260) mit dem Fluid gesteuert werden kann, wobei insbesondere vorgesehen ist, dass der Reifen ein zweites Ventil (60) aufweist, welches ebenfalls mit dem Volumen (260) verbunden ist und über das die Entleerung des Volumens (260) mit dem Fluid gesteuert werden kann.

7. Reifen nach einem der vorhergehenden Ansprüche, **dadurch gekennzeichnet, dass** das Volumen (260) wenigstes abschnittsweise einen ersten Schlauch repräsentiert, welcher insbesondere der Lauffläche des Reifens zugeordnet ist.

8. Schlauchreifen (200) mit einem Reifen nach einem der Ansprüche 1 bis 7, **dadurch gekennzeichnet, dass** das Volumen (260) zwischen Reifenmantel (250) und einem zweitem Schlauch (270) ausgebildet ist, wobei insbesondere vorgesehen ist, dass das Volumen (260) und der zweite Schlauch (270) aneinander anliegend ausgestaltet sind.

9. Rad mit einer Felge (210) und einem Reifen nach einem der Ansprüche 1 bis 7 oder einem Schlauchreifen (200) nach Anspruch 8, **dadurch gekennzeichnet, dass** auf der Felge (210) ein zweiter Schlauch (270) aufsitzt, über dem in radialer Richtung das im Wesentliche vollumfängliche Volumen (260) angeordnet ist, welches durch den Reifenmantel (250) im Wesentlichen abgedeckt wird.

10. Rad nach Anspruch 9, **dadurch gekennzeichnet, dass** das Rad eine Pumpe (70) aufweist, welche über ein Ventil mit dem Volumen verbunden ist und zur Befüllung des Volumens (260) mit einem Fluid, insbesondere Luft, geeignet ist.

11. Zweirad mit wenigstens einem Rad nach Anspruch 9 oder 10, wobei das Zweirad ein Steuergerät (10) zur Steuerung der Befüllung des Volumens (260) und eine Sensorik (20) zur Erfassung des Zustands des befahrenen Untergrund aufweist, wobei die Steuerung der Befüllung und/oder der Entleerung des Volumens (260) mit einem Fluid in Abhängigkeit von dem erfassten Zustands des Untergrunds erfolgt, insbesondere durch Ansteuerung eines Ventils (50, 60) und/oder der Pumpe (70).

12. Verfahren zur Steuerung und/oder Regelung der Veränderung der Manteloberfläche (220)
• eines Reifens nach einem der Ansprüche 1 bis 7 oder
• eines Schlauchreifens (200) nach Anspruch 8,
wobei
• der Reifen ein im Wesentlichen vollumfängliches Volumen (260) aufweist, und
• dem Volumen (260) ein bewegliches Profilelement (240) zugeordnet ist, welches in Abhängigkeit von der Befüllung des Volumens (260) mit einem Fluid das Profil des Reifenmantels (220) verändert,
wobei zur Steuerung und/oder Regelung
• mittels einer Sensorik (20) der Zustand des durch den Reifen befahrenen Untergrunds erfasst und
• die Befüllung und/oder die Entleerung des Volumens (260) mit einem Fluid in Abhängigkeit von dem erfassten Zustands des Untergrunds durchgeführt wird.

13. Verfahren nach Anspruch 12, **dadurch gekennzeichnet, dass** zur Befüllung und/oder Entleerung des Volumens (260) ein Ventil (50, 60) und/oder eine Pumpe (70) angesteuert wird.
